# EUROPEAN PATENT SPECIFICATION

(11) **EP 0 498 340 B1**
(45) Date of publication and mention of the grant of the patent: **15.11.1995**
(21) Application number: 92101720.8
(22) Date of filing: 03.02.1992
(51) Int. Cl.: B60K 17/356, B60K 17/34, B60K 17/36

(54) **Off-road vehicle with at least four drive and direction wheels**
Geländefahrzeug mit zumindest vier angetriebenen Lenkrädern
Véhicule tout-terrain avec au moins quatre roues motrices et de direction

(30) Priority: 05.02.1991 IT CN910001
(43) Date of publication of application: 12.08.1992
(73) Proprietor: MERLO S.P.A. INDUSTRIA METALMECCANICA, I-12020 S. Defendente di Cervasca (IT)
(72) Inventor: Merlo, Amilcare, I-12100 Cuneo (IT); Calfre', Renato, I-12011 Borgo San Dalmazzo (IT)
(74) Representative: Plebani, Rinaldo

(56) References cited:
- WO-A-86/04306
- AU-B- 504 609
- CH-A- 294 538
- FR-A- 831 375
- US-A- 3 858 730
- US-A- 4 090 411

## Description

The present invention relates to an off-road vehicle with at least four drive and direction wheels, particularly suitable for moving over exceptionally difficult terrain for transporting various types of machinery or equipment, as specified in the preamble of claim 1. Such a vehicle is known from AU-B-504609.

Vehicles of the aforementioned type normally feature one of two design solutions.

In one, a hydrostatic motor powers a conventional mechanical drive comprising drive axles for transmitting motion to the wheels and fitted with mechanical differential devices connected by various types of gearing, such as universal joints, change gears or differential gears.

In the other, each drive wheel is powered by an independent hydraulic motor, either a low-speed type connected directly to the wheel, or a higher-speed type connected to the wheel via a respective reduction unit.

Both these solutions present drawbacks, particularly under difficult operating conditions involving a substantial difference in the grip of one wheel as compared with another.

In order to eliminate this drawback, in the AU-B-504609 has been proposed a skid-steer loader featuring four drive wheels comprising two hydraulic motors, each powering a respective mechanical drive for transmitting motion to the wheels on one side of the vehicle.

But in this vehicle each wheel is rigidly fixed to the frame of the vehicle itself and therefore it can be only used on a terrain perfectly flat in order to have all the wheels in contact with the terrain.

It is an object of the present invention to provide a vehicle of the type briefly described above, designed to overcome the aforementioned drawback.

According to the present invention, there is provided a vehicle featuring four or more drive wheels powered by a pressurized hydraulic fluid comprising at least two hydraulic motors, each powering a respective mechanical drive for transmitting motion to the wheels on one side of the vehicle, each said mechanical drive comprising a longitudinal shaft substantially parallel to the longitudinal axis of the vehicle; and a number of reduction units, each designed to transmit, mechanically and with a fixed gear ratio, the motion of said longitudinal shaft to a respective axle of one of said drive wheels, characterized by the fact that each said axle is supported on a rocker arm connected to the vehicle frame substantially by means of a hinge, the axis of which coincides with the axis of said shaft; said hinge comprising at least one rolling bearing.

The vehicle according to the present invention will be described by way of example with reference to the accompanying drawings, in which:
Fig.1 shows a schematic plan view of the vehicle according to the present invention;
Fig.2 shows a schematic vertical section along line II-II of the Fig.1 vehicle.

The vehicle according to the present invention comprises at least two hydraulic motors 1, each powering a respective mechanical drive 2 for transmitting motion to the wheels 3 on one side of the vehicle. Hydraulic motors 1 are connected to a single hydraulic circuit of which forms part a pressurized fluid source 4 conveniently consisting of a normal hydraulic system powered by the internal combustion engine (not shown) of the vehicle.

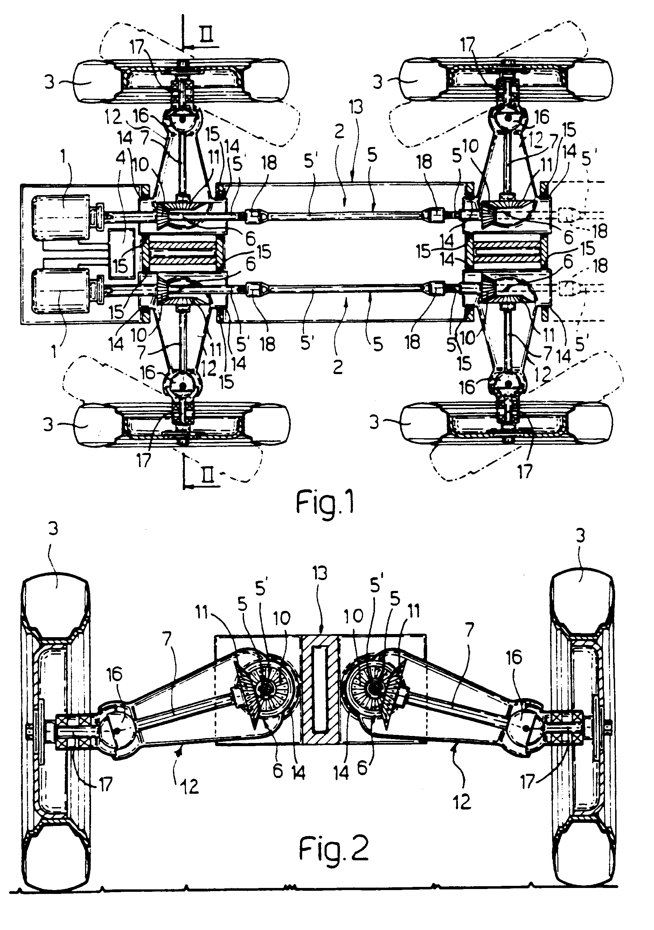

As shown in Fig.1, hydraulic motors 1 are conveniently connected parallel to pressurized fluid source 4, for exploiting the hydraulic differential effect created by such an arrangement. According to an alternative arrangement, motors 1 may be connected in series with source 4, in which case, the hydraulic differential effect is obtained by providing the hydraulic circuit with means for compensating fluid supply to the two motors.

Each mechanical drive 2 comprises a longitudinal shaft 5 substantially parallel to the longitudinal axis of the vehicle; and a number of reduction units 6, each designed to transmit, mechanically and with a given gear ratio, the motion of longitudinal shaft 5 to a respective axle 7 of one of wheels 3. Though the embodiment shown relates to a vehicle featuring four drive wheels, the present invention also applies to vehicles comprising any number of drive wheels. As such, shaft 5 of each drive 2 may comprise portions 5' (shown by the dotted line) for transmitting motion to other drive axles not shown.

Each reduction unit 6 conveniently comprises a pair of bevel gears 10, 11, the first integral with shaft 5 and the second with a respective axle 7. Each axle 7 is supported on a rocker arm 12 connected to frame 13 of the vehicle substantially by means of a hinge, the axis of which coincides with the axis of shaft 5. For achieving said hinge connection, each rocker arm 12 conveniently comprises two annular end projections 14 rotating in respective seats 15 on frame 13 via the interposition of rolling bearings (not shown). Each shaft 5 is fitted through annular projections 14, as shown clearly in Fig.1.

Each rocker arm 12 comprises an angle joint 16 connected to axle 7 and to stub axle 17 of a respective wheel 3, for transmitting motion from the axle to the stub axle and enabling angular movement of the stub axle in relation to the axle for steering wheel 3.

Each longitudinal shaft 5 comprises a number of portions 5' connected by means of axial joints 18, which may consist of straightforward splined couplings.

Performance of the above vehicle is as follows.

All the wheels 3 on one side of the vehicle are powered by one of hydraulic motors 1 via a single mechanical drive 2. Consequently, in the event of one or more of the wheels failing to grip the terrain, the full power of the motor is made available to the wheels capable of traction. The vehicle according to the present invention therefore provides for fully exploiting the power of the hydraulic motors automatically, with no assistance required on the part of the user, and with no need for special additional features such as differential lock members. Unlike vehicles with traditional differentials, the vehicle according to the present invention is prevented from incurring critical operating conditions, as when the loss of traction of one wheel of each axle results in a total loss of traction of the diagonally opposite wheels, which situation is known to occur when maximum traction is reached by certain of the wheels, or when the suspensions are pushed to the limit of their capacity.

When the vehicle according to the present invention is operated over uneven terrain, each rocker arm 12 oscillates about the axis of annular projections 14 and seats 15 to assume an angular position in relation to frame 13 depending on the deformation of the elastic suspensions of the arm itself. As arm 12 oscillates, each reduction unit 6 provides for mechanically transmitting motion from shaft 5 to axle 7 by maintaining bevel gears 10 and 11 permanently meshed. This is made possible by virtue of the oscillation axis of arm 12 coinciding with the axis of longitudinal shaft 5. Oscillation of arms 12 will therefore be accompanied solely by axial displacement of portions 5' of shaft 5 as permitted by axial joints 18.

The steering of each wheel 3 is permitted by angle joints 16.

Each rocker arm 12 may be connected elastically to the vehicle frame by means of a suitable traditional suspension (not shown). The vehicle may also be provided with a brake system at any point along mechanical drive 2 or between each wheel 3 and respective rocker arm 12. Though consisting, in the example shown, of a pair of bevel gears 10 and 11, each reduction unit 6 may comprise more than one pair of different gears, or further reduction units. For example, a further reduction unit may be provided upstream from each wheel 3, or between each hydraulic motor 1 and longitudinal shaft 5.

Finally, hydraulic motors 1 may be connected differently to the hydraulic circuit connecting them to pressurized fluid source 4, and the circuit itself provided with additional devices and members.

## Claims

1. A vehicle featuring four or more drive wheels powered by a pressurized hydraulic fluid comprising at least two hydraulic motors (1), each powering a respective mechanical drive (2) for transmitting motion to the wheels (3) on one side of the vehicle, each said mechanical drive (2) comprising a longitudinal shaft (5) substantially parallel to the longitudinal axis of the vehicle; and a number of reduction units (6), each designed to transmit, mechanically and with a fixed gear ratio, the motion of said longitudinal shaft (5) to a respective axle (7) of one of said drive wheels (3), characterized by the fact that each said axle (7) is supported on a rocker arm (12) connected to the vehicle frame (13) substantially by means of a hinge, the axis of which coincides with the axis of said shaft (5); said hinge comprising at least one rolling bearing.

2. A vehicle as claimed in Claim 1, characterized by the fact that each said rocker arm (12) comprises two annular projections (14) rotating in respective seats (15) on said frame (13) via the interposition of rolling bearings; said longitudinal shaft (5) being fitted through said annular projections (14).

3. A vehicle as claimed in one of the Claims 1 or 2, characterized by the fact that said wheels are direction wheels.

4. A vehicle as claimed in Claim 2 or 3, characterized by the fact that each said rocker arm (12) comprises an angle joint (16) connected to said axle (7) and to the stub axle (17) of a respective said wheel (3), for enabling angular movement of the stub axle (17) in relation to the axle (7) and so steering said wheels (3).

5. A vehicle as claimed in one of the foregoing Claims, characterized by the fact that each said reduction unit (6) comprises a pair of bevel gears, one (10) integral with said shaft (5), and the other (11) with said axle (7).

6. A vehicle as claimed in one of the foregoing Claims, characterized by the fact that said two hydraulic motors (1) are connected to a hydraulic circuit of which a pressurized fluid source (4) forms part.

7. A vehicle as claimed in Claim 6, characterized by the fact that said two hydraulic motors (1) are connected parallel to said pressurized fluid source (4).

8. A vehicle as claimed in Claim 6, characterized by the fact that said two hydraulic motors (1) are connected in series with said pressurized fluid source (4).

9. A vehicle as claimed in one of the foregoing Claims, characterized by the fact that each said longitudinal shaft (5) comprises a number of portions (5') connected by means of splined axial joints (18).

## Patentansprüche

1. Fahrzeug mit vier oder mehr Antriebsrädern, die durch ein hydraulisches Druckfluid angetrieben werden, das zumindest zwei Hydraulikmotoren (1) aufweist, von denen jeder einen jeweiligen mechanischen Antrieb (2) zur Übertragung der Bewegung zu den Rädern (3) an einer Seite des Fahrzeugs antreibt, wobei der mechanische Antrieb (2) eine Längswelle (5), die zur Längsachse des Fahrzeugs im wesentlichen parallel verläuft, und eine Anzahl von Untersetzungseinheiten (6) aufweist, von denen jede so gestaltet ist, daß diese mechanisch und mit einem festgelegten Übersetzungsverhältnis die Bewegung der Längswelle (5) zu einer jeweiligen Achse (7) von einem der Antriebsräder (3) überträgt, das dadurch gekennzeichnet ist, daß die Achse (7) an einem Kipphebel (12) gelagert ist, der mit dem Fahrzeugrahmen (13) im wesentlichen mittels eines Gelenks verbunden ist, wobei seine Achse mit der Achse der Welle (5) zusammenfällt und wobei das Gelenk Zumindest ein Wälzlager aufweist.

2. Fahrzeug nach Anspruch 1, das dadurch gekennzeichnet ist, daß der Kipphebel (12) zwei ringförmige Vorsprünge (14) aufweist, die sich in jeweiligen Sitzen (15) am Rahmen (13) mittels der Zwischenschaltung von Wälzlager drehen, wobei die Längswelle (5) durch die ringförmigen Vorsprünge (14) hindurch gepaßt ist.

3. Fahrzeug nach einem der Ansprüche 1 und 2, das dadurch gekennzeichnet ist, daß die Räder Lenkräder bzw. Richtungsräder sind.

4. Fahrzeug nach einem der Ansprüche 2 und 3, das dadurch gekennzeichnet ist, daß jeder Kipphebel (12) ein Winkelgelenk (16) aufweist, das mit der Achse (7) und dem Achszapfen (17) eines jeweiligen Rades (3) verbunden ist, um die Winkelbewegung des Achszapfens (17) in Bezug zur Achse (7) zu ermöglichen und so die Räder (3) zu lenken.

5. Fahrzeug nach einem der vorhergehenden Ansprüche, das dadurch gekennzeichnet ist, daß jede Untersetzungseinheit (6) ein Paar von Kegelrädern aufweist, von denen eines (10) mit der Welle (5) einstückig ausgebildet ist und das andere (11) mit der Achse (7).

6. Fahrzeug nach einem der vorhergehenden Ansprüche, das dadurch gekennzeichnet ist, daß die zwei Hydraulikmotoren (1) mit einem Hydraulikkreis verbunden sind, wobei eine Druckfluidquelle (4) einen Teil von diesem bildet.

7. Fahrzeug nach Anspruch 6, das dadurch gekennzeichnet ist, daß die zwei Hydraulikmotoren (1) mit der Druckfluidquelle (4) parallelgeschaltet sind.

8. Fahrzeug nach Anspruch 6, das dadurch gekennzeichnet ist, daß die zwei Hydraulikmotoren (1) mit der Druckfluidquelle (4) in Reihe geschaltet sind.

9. Fahrzeug nach einem der vorhergehenden Ansprüche, das dadurch gekennzeichnet ist, daß jede Längswelle (5) eine Anzahl von Abschnitten (5') aufweist, die mittels kerbverzahnter Axialgelenke (18) verbunden sind.

## Revendications

1. Véhicule comprenant au moins quatre roues motrices, dont la puissance est fourbie par un fluide hydraulique sous pression, comportant au moins deux moteurs hydrauliques (1), chacun fournissant respectivement la puissance à un entraînement mécanique (2) pour transmettre le mouvement à des roues (3) d'un côté du véhicule, chacun des entraînements mécaniques (2) comportant un arbre longitudinal (5) sensiblement parallèle à l'axe longitudinal du véhicule ; et un certain nombre d'unités de réduction (6), chacune étant prévue pour transmettre mécaniquement suivant un rapport de démultiplication fixe le mouvement dudit arbre longitudinal (5) à un essieu respectif (7) de l'une desdites roues motrices (3), caractérisé par le fait que chaque essieu (7) est supporté par un bras oscillant (12) connecté au châssis du véhicule (13) sensiblement au moyen d'une charnière, dont l'axe coïncide avec l'axe dudit arbre (5) ; ladite charnière comportant au moins un palier rotatif.

2. Véhicule suivant la revendication 1, caractérisé par le fait que chaque bras oscillant (12) comporte deux protubérances annulaires (14) en rotation dans des sièges respectifs (15) sur ledit châssis (13) par l'intermédiaire de paliers rotatifs interposés ; ledit arbre longitudinal (5) étant monté à travers lesdites protubérances annulaires (14).

3. Véhicule suivant la revendication 1 ou la revendication 2, caractérisé par le fait que lesdites roues sont des roues de direction.

4. Véhicule suivant les revendications 2 ou 3, caractérisé par le fait que chacun desdits bras oscillants (12) comporte un joint coudé (16) connecté audit essieu (7) et à la fusée (17) d'une desdites roues respectives (3) pour permettre le déplacement angulaire de la fusée (17) par rapport à l'essieu (7) et orienter ainsi lesdites roues (3).

5. Véhicule suivant l'une quelconque des revendications précédentes, caractérisé par le fait que chacune desdites unités de réduction (6) comporte une paire de pignons coniques, l'un (10) étant intégré audit arbre (5), l'autre (11) étant intégré audit essieu (7).

6. Véhicule suivant l'une quelconque des revendications précédentes, caractérisé par le fait que lesdits deux moteurs hydrauliques (1) sont connectés à un circuit hydraulique dont fait partie la source de fluide sous pression (4).

7. Véhicule suivant la revendication 6, caractérisé par le fait que lesdits deux moteurs hydrauliques (1) sont connectés en parallèle à ladite source de fluide sous pression (4).

8. Véhicule suivant la revendication 6, caractérisé par le fait que lesdits deux moteurs hydrauliques (1) sont connectés en série avec ladite source de fluide sous pression (4).

9. Véhicule suivant l'une quelconque des revendications précédentes, caractérisé par le fait que chacun desdits arbres longitudinaux (5) comporte un certain nombre de portions (5') connectées au moyen de joints axiaux clavetés (18).
